# EUROPÄISCHE PATENTSCHRIFT

(11) **EP 0 981 809 B1**
(45) Veröffentlichungstag und Bekanntmachung des Hinweises auf die Patenterteilung: **12.12.2001**
(21) Anmeldenummer: 98916848.9
(22) Anmeldetag: 03.03.1998
(51) Int. Cl.: G07G 1/00

(54) **EINRICHTUNG UND VERFAHREN ZUR BESTIMMUNG DER MÜNZGELDMENGE IN KASSENGELDLADEN EINES POS-KASSENSYSTEMS**
DEVICE AND METHOD FOR DETERMINING THE AMOUNT OF COINS IN A POS CASH DRAWER
SYSTEME ET PROCEDE POUR DETERMINER LA QUANTITE DE MONNAIE SE TROUVANT DANS UN TIROIR-CAISSE DE POINT DE VENTE

(30) Priorität: 05.05.1997 DE 19718987
(43) Veröffentlichungstag der Anmeldung: 01.03.2000
(73) Patentinhaber: Wincor Nixdorf GmbH & Co KG, 33106 Paderborn (DE)
(72) Erfinder: BAITZ, Günter, D-13503 Berlin (DE)
(86) Internationale Anmeldenummer: DE9800635
(87) Internationale Veröffentlichungsnummer: WO9850895

(56) Entgegenhaltungen:
- EP-A- 0 090 894
- WO-A-87/04832
- FR-A- 1 038 152
- FR-A- 2 586 840
- GB-A- 838 374
- US-A- 4 522 275
- US-A- 4 636 634
- US-A- 5 038 023
- "SMART POINT OF SALE REGISTER CASH DRAWER" IBM TECHNICAL DISCLOSURE BULLETIN, Bd. 39, Nr. 12, Dezember 1996, Seite 17/18 XP000619896

## Beschreibung

Die Erfindung betrifft einen in eine Kassengeldlade einsetzbaren und aus dieser entnehmbaren Münzeinsatz für eine Münzart, eine Einrichtung mit einer Scanner-Waage zur Bestimmung der Geldmenge in wenigstens einem dieser Einsätze und ein Verfahren, zur Zuordnung einer so bestimmten Geldmenge zu einer Bedienperson.

Aus der GB-A-22 69 088 ist eine Einrichtung zum Münzzählen bekannt. Hierbei enthält eine POS-Kasse eine Kassengeldlade mit mehreren einzeln entnehmbaren Münzfächern. Die Münzfächer können hierbei unterschiedliche Formen und Wandstärken aufweisen, wobei jedoch das Gewicht jedes Münzfaches innerhalb eines Toleranzbereichs gleich ist. Die Münzfächer können einzeln entnommen werden. Weiterhin enthält die Einrichtung eine Waage mit Speichersoftware. Zum Bestimmen des Gewichts wird jeweils eine Münze einer Münzsorte gewogen und die Werte (Gewicht und Notierung) durch die Waagensoftware abgespeichert. Nachfolgend wird das Münzfach mit den inneliegenden Münzen gewogen, wobei das Gewicht des Münzfaches subtrahiert wird. Die Waage enthält hierbei ein Bedienpanel, wobei die Bedienperson festlegen kann, welche Operation -einzelne Münze oder Münzfach wiegen- sie durchführen möchte. Durch die Waagensoftware wird anschließend der Wert des in dem gewogenen Münzfach befindlichen Geldbetrages bestimmt und über entsprechende Mittel ausgegeben. Nachteilig an der bekannten Lösung ist die Tatsache, daß durch manuelle Eingabe der Bedienperson die jeweilige Münzart für das entnommene Münzfach eingegeben werden muß, somit kann es sowohl zu Bedienerfehlern als auch zu Manipulationen beim Münzwiegen kommen.

In der WO-A-87/04832 ist eine Kassenlade mit einer einsetzbaren und entnehmbaren Geldlade geoffenbart, welche aus mehreren Fächern für Münzen und Banknoten besteht. Die Geldlade ist in ihrem rückwärtigen Teil mit einem Mechanismus zur Identifikation der Geldlade ausgestattet. Eine Vorrichtung zum automatischen Erfassen der Anzahl der Münzen in einem Münzeinsatz ist nicht angegeben.

Die US-A-4 522 275 zeigt eine Kassengeldlade mit Münzfächern, wobei jedem Münzfach eine wägeeinrichtung zugeordnet ist. Ein Kassenterminal gestattet die kontinuierliche Inventur des Münzbestandes und damit eine Überprüfung der eingenommenen bzw. zurückgegebenen Münzen und vermeidet so Fehler beim Kassenabschluß oder Wechselgeld. Die Münzfächer ruhen auf den Wägeeinrichtungen und sind somit einsetzbar und entnehmbar.

Die FR-A-2 586 840 zeigt eine vergleichbare Kassengeldlade mit mehreren einsetzbaren und entnehmbaren Münzeinsätzen.

Aufgabe der Erfindung ist es daher. Bedienungsfehler und Manipulationen beim Wiegen von Münzeinsätzen durch das Bedienpersonal zu vermeiden.

Die Aufgabe wird durch die Merkmale des Anspruchs 1 gelöst.

Dazu befindet sich am Münzeinsatz eine maschinell abtastbare Codierung, die diesen kennzeichnende Daten enthält. Die Codierung ist hierbei vorzugsweise an der Unterseite des Münzeinsatzes angebracht und als optisch abtastbare Codierung, vorzugsweise als Barcode-Markierung ausgebildet. Die Codierung enthält zum Beispiel Angaben über die Münzart, das Gewicht des Einsatzes und die Bedienperson, der die Kassengeldlade zugeordnet ist. Zur sicheren Einordnung der einzelnen Münzeinsätze in die Kassengeldlade ist jeder Münzeinsatz mit mindestens einer mechanischen Platzcodierung versehen, die mit einer mechanischen Platzcodierung in einem Aufnahmefach der Kassengeldlade korrespondiert. Eine Scanner-Waage ist elektronisch mit einem Warenabrechnungscomputer einer POS-Kasse verbunden, die eine abgetastete Codierung in Signale, die durch ein POS-Kassensystem verarbeitet werden können, umsetzt. Der Warenabrechnungscomputer ist vorzugsweise Teil des POS-Kassensystems und besteht mindestens aus einer Verarbeitungs- und einer Speichereinheit. Die Scanner-Waage erfaßt die maschinell abtastbare Codierung zugleich mit dem Gewicht des Münzeinsatzes. Anschließend wird durch die Verarbeitungseinheit die Differenz aus dem Gesamtgewicht des Münzeinsatzes und dem Taragewicht des Münzeinsatzes bestimmt und mittels Verabeitungsroutinen, in denen das Münzgewicht einer einzelnen Münze hinterlegt ist, die im Münzeinsatz befindliche Geldmenge bestimmt und abgespeichert. Nachfolgend wird die so ermittelte Geldmenge mit den übrigen aus der Barcode-Markierung ausgelesenen Daten in einem Datensatz verknüpft und abgespeichert. Mit diesem Datensatz werden Zusatzangaben, dieses sind zum Beispiel Kassennummer, Datum und Uhrzeit die bereits in der Speichereinheit vorliegen verknüpft. Dieser so erhaltene Datensatz wird unter einem entsprechenden Schlüssel abgespeichert bzw. durch geeignete Ausgabemedien ausgegeben.

Der Benutzercode der Bedienperson kann auch durch die Anmeldung der Bedienperson am POS-Kassensystem mit zu den schon vorhandenen Vorgangsdaten hinzugefügt und gespeichert werden. Weiterhin können die einzelnen Münzeinsätze das gleiche Gewicht aufweisen, dessen Wert dann ebenfalls in der Speichereinheit hinterlegt ist.

Wenn eine Kassengeldlade jeweils einer Bedienperson zugeordnet ist, können innerhalb einer Arbeitsschicht die Datensätze der einzelnen Münzeinsätze der Bedienperson orts- und zeitspezifisch gesammelt und bei Kassenübergabe der Gesamtgeldbetrag des Münzgeldes der einzelnen gewogenen Münzeinsätze ermittelt und ausgegeben werden. Zu Revisions- und Kontrollzwecken können diese Daten in einem gesondert gesicherten Bereich der Speichereinheit mitgeführt, gespeichert und durch geeignete Ausgabemedien ausgegeben werden.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:
- Fig. 1: eine Zusammenstellung eines POS-Kassensystems mit einer Scanner-Waage und einer der Übersichtlichkeit halber ohne Deckel dargestellter Geldlade,
- Fig. 2: eine erfindungsgemäße Kassengeldlade in Draufsicht,
- Fig. 3: eine Kassengeldlade nach Fig. 1 gemäß dem Schnitt A-A.

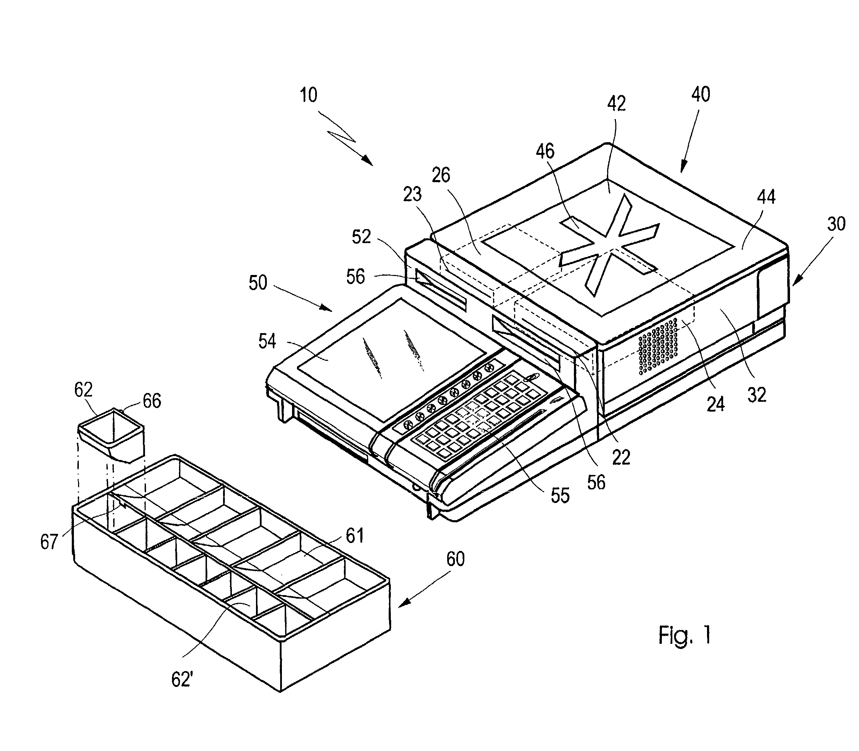

In Figur 1 ist ein Aufbaukonzept eines modularen POS-Kassensystems dargestellt, das allgemein mit 10 bezeichnet ist. Es umfaßt eine Basisstation 30 mit einer Basisbox 32, die die Kassenelektronik und den entsprechenden Warenabrechnungscomputer enthält, einen Bon-Drucker 24, einen Etiketten-Drucker 26, eine Anzeige- und Bedieneinheit 50 und eine sogenannten Scanner-Waage 40. Diese besteht aus einer Wägeplatte 44, in die das Fenster 42 eines Strichkodelesers 46 eingelassen ist. Eine einer jeweiligen Bedienperson zugeordnete Kassengeldlade 60 (der Übersichtlichkeit halber ohne Deckel dargestellt) komplettiert das Aufbaukonzept.

An die Vorderseite der Basisbox 32 ist die Anzeige- und Bedieneinheit 50 angesetzt. Die Anzeige- und Bedieneinheit 50 ist mit einer Anzeigevorrichtung 54 und einer Tastatur- und Kartenleseeinheit 55 bestückt. Über diesen befindet sich eine einer Bedienperson zugekehrte Informationswand 52, in die zwei Druckgut-Durchlasse 56 eingelassen sind, wobei einer mit einem die Vorderwand der quaderförmigen Basisbox 32 durchdringenden Druckgut-Auslaß 22 des Bon-Druckers 24 und der andere mit einem ebenfalls die Vorderwand der Basisbox 32 durchdringenden Druckgut-Auslaß 23 des Etiketten-Druckers 26 fluchtet. Je nach Einsatzfall des Arbeitsplatzes kann auch nur einer von beiden Druckern in die Basisbox 32 eingebaut sein.

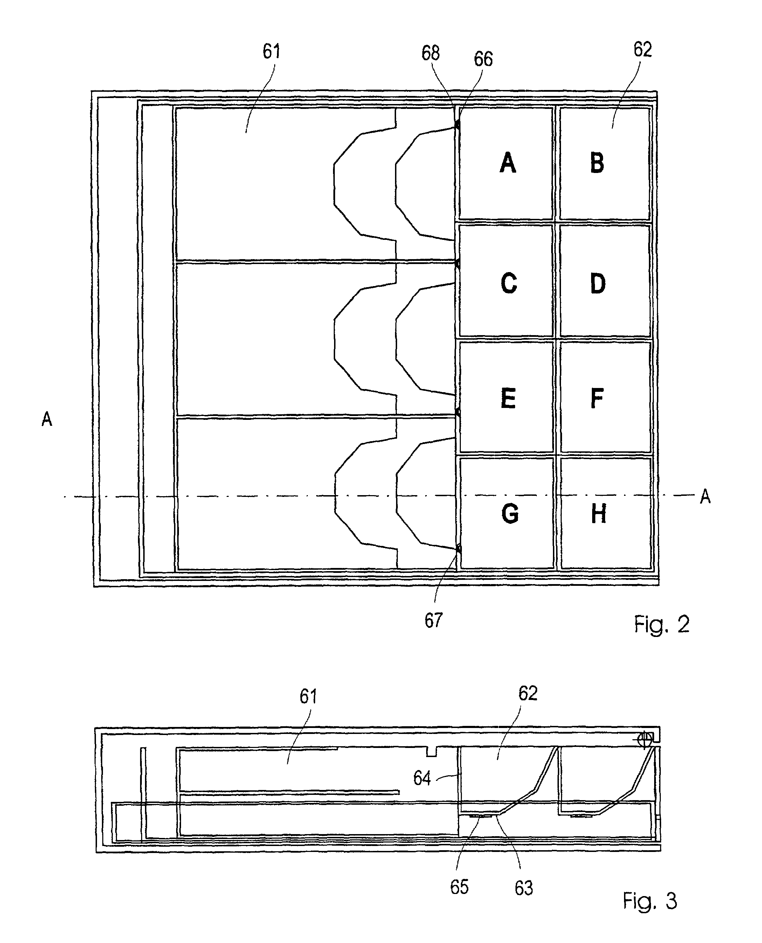

Die Kassengeldlade 60 weist mehrere Geldscheinfächer 61 und mehrere durch die Bedienperson einzeln entnehmbare Münzeinsätze 62 auf. Letztere sind lose in Aufnahmefächer 62' in der Kassengeldlade 60 eingesetzt. In Fig. 2 sind diese Münzeinsätze 62 mit A-H bezeichnet. Jeder Münzeinsatz 62 ist an seiner Unterseite 63 mit einer optisch abtastbaren Codierung, vorzugsweise einer Barcode-Markierung 65 versehen, wobei selbige Angaben über die Münzart, das Gewicht des Einsatzes und die Bedienperson enthält. Weiterhin weist jeder Münzeinsatz 62 eine mechanische Platzcodierung 66 auf, die mit einer mechanischen Platzcodierung 67 (Fig. 1 und 2) in einem der Aufnahmefächer 62' korrespondiert. Zur Herstellung der Platzcodierungen sind mehrere Gestaltungsmethoden anwendbar, z.B. Bohrungen-Stifte, Rastnasen-Ausnehmungen oder Rastklingen, die in Hinterschneidungen eingreifen usw.. In Fig. 2 sind beispielhaft die Platzcodierungen an einer Seitenwand 64 der Münzeinsätze 62 als Rastnasen 66 angebracht, die in zugehörige Rastausnehmungen 67 einer Trennwand 68 der Kassengeldlade 60 eingreifen. Die Platzcodierungen befinden sich hierbei stets an unterschiedlichen Stellen (beispielhaft in Fig. 2 dargestellt), so daß jedem Münzeinsatz 62 zwingend ein entsprechender Platz in der Kassengeldlade 60 zugeordnet ist. Da im allgemeinen einer Bedienperson eine Kassengeldlade zu treuen Händen anvertraut ist, können die Münzeinsätze 62 nur durch die Bedienperson selbst in die Kassengeldlade 60 eingesetzt werden. Somit kann jeder Münzsorte ein entsprechender Münzeinsatz 62 bedienerindividuell zwingend zugeordnet werden.

Soll nun der Wert eines gefüllten Münzeinsatzes 62 bestimmt werden, so entnimmt die Bedienperson den Münzeinsatz 62 und stellt ihn auf die Scanner-Waage 40. Der Strichcodeleser 46 tastet die in der Barcode-Markierung 65 codierten Daten ab, wie z.B. das Gewicht des Einsatzes, die Münzart und den Benutzercode der Bedienperson, gleichzeitig wird der Münzeinsatz 62 gewogen. Die so gewonnenen Daten werden an eine nicht dargestellte Verarbeitungseinheit des POS-Kassensystems 10 übergeben. Anschließend wird durch selbige die Differenz aus dem Gesamtgewicht des Münzeinsatzes und dem Taragewicht des Münzeinsatzes bestimmt. Durch festgelegte Verarbeitunsroutinen, in denen zum Beispiel das Münzgewicht einer einzelnen Münze hinterlegt ist, wird die im Münzeinsatz befindliche Geldmenge bestimmt, auf Plausibilität geprüft und in einer nicht dargestellten Speichereinheit abgespeichert. Nachfolgend werden die ermittelte Geldmenge und die sonstigen aus der Barcode-Markierung ausgelesenen Daten in einem Datensatz verknüpft und abgespeichert. Die in der Speichereinheit des Warenabrechnungscomputers bereits vorliegenden Angaben, wie Kassennummer, Datum, Uhrzeit, werden aus selbiger ausgelesen und mit dem bereits vorliegenden Datensatz verknüpft. Anschließend wird der so ergänzte Datensatz beispielsweise unter einem Schlüssel abgespeichert bzw. durch die Anzeige- und Bedieneinheit 50 oder den Bon-Drucker 26 ausgegeben.

Alternativ kann auch durch die Anmeldung der Bedienperson am POS-System der Benutzercode im System schon hinterlegt sein und zu den schon vorhandenen Vorgangsdaten hinzugefügt und gespeichert werden. In diesem Fall ist der Benutzercode in der Barcode-Markierung 65 überflüssig. Weiterhin ist es möglich die Münzeinsätze 62 so zu gestalten, daß sie alle das gleiche Gewicht aufweisen, somit entfällt die Gewichtsangabe in der Codierung auf dem Barcode-Markierungen 65 ebenfalls, der Gewichtswert wird einfach in der Speichereinheit des Warenabrechnungscomputers hinterlegt.

Somit ist unabhängig von Bedienungsfehlern und Manipulationsversuchen sichergestellt, daß für den jeweiligen Münzeinsatz 62 die entsprechende Geldmenge und somit der entsprechende Geldbetrag ermittelt und benutzer-, orts- und zeitspezifisch abgespeichert, bzw. durch die Anzeige- und Bedieneinheit 50 oder den Bon-Drucker 26 ausgegeben wird.

Nach dem Wiegen aller Münzeinsätze 62 wird der Gesamtgeldbetrag des in der Kassengeldlade 60 befindlichen Münzgeldes ermittelt, wobei für jede Bedienperson die Daten orts- und zeitspezifisch gesammelt werden und bei Kassenübergabe der Gesamtgeldbetrag des Münzgeldes über die Anzeige- und Bedieneinheit 50 oder den Drucker 26 ausgegeben wird, bzw. zu Revisions- und/oder Kontrollzwecken in einem nur den Kontrollorganen zugänglichen gesonderten Speicherbereich der Speichereinheit gespeichert wird.

Somit wird bei Kassenübergaben wertvolle Arbeitszeit durch den Wegfall des Zählens des Münzgeldes durch die Bedienperson eingespart.

In einer Weiterbildung der Erfindung kann die Barcode-Markierung 65 als Barcode-Label durch den Etiketten-Drucker 24 erstellt werden, indem die entsprechend notwendigen Daten aus dem Warenabrechnungscomputer abgerufen, bzw. durch die Scanner-Waage 40 ermittelt und in die Codierung umgesetzt und gedruckt werden. Dies kann z.B. bei einer Währungsumstellung, einer Umstellung der Kassengeldladen-Zuordnung und bei einer Umstellung des Gewichts der Münzen usw. notwendig werden.

## Patentansprüche

1. Münzeinsatz (62) für eine Münzart, welcher in eine Kassengeldlade (60) einsetzbar und aus dieser entnehmbar ist,
**dadurch gekennzeichnet,**
**daß** am oder im Münzeinsatz (62) eine diesen und die darin abzulegende Münzart kennzeichnende Daten enthaltende maschinell abtastbare Codierung (65) angebracht ist.

2. Münzeinsatz (62) nach Anspruch 1,
**dadurch gekennzeichnet,**
**daß** wenigstens eine Codierung an der Unterseite (63) des Münzeinsatzes (62) angebracht ist, die als optisch abtastbare Codierung (65), vorzugsweise als Barcode-Markierung ausgebildet ist.

3. Münzeinsatz (62) nach Anspruch 1 oder 2, wobei die Codierung (65) Angaben über das Gewicht des Münzeinsatzes (62) und/oder die Bedienperson enthält, welcher die Kassengeldlade (60) zugeordnet ist.

4. Kassengeldlade (60) mit einer Vielzahl von Aufnahmefächern (62') mit jeweils einem Münzeinsatz (62) nach einem der Ansprüche 1 bis 3,
**dadurch gekennzeichnet,**
**daß** jeder Münzeinsatz (62) mindestens eine mechanische Platzcodierung (66) enthält, die mit einer mechanischen Codierung (67) in einem Aufnahmefach (62') der Kassengeldlade (60) korrespondiert.

5. Verfahren zur Erfassung der Geldmenge in einem Münzeinsatz (62) mit einer Einrichtung nach einem der vorangegangenen Ansprüche, mit folgenden Merkmalen:
- eine Scannerwaage (40) ermittelt das Gesamtgewicht des gefüllten Münzeinsatzes (62) und tastet die in der Codierung (65) enthaltenen Daten, welche den Münzeinsatz (62) und die darin abzulegende Münzart kennzeichnen, ab,
- durch eine Verarbeitungseinheit eines Warenabrechnungscomputers wird die Differenz aus dem Gesamtgewicht des Münzeinsatzes (62) und dem in den Daten der Codierung (65) enthaltenen Taragewicht des Münzeinsatzes (62) bestimmt und mittels Verarbeitungsroutinen, in denen das Münzgewicht einer einzelnen Münze hinterlegt ist, die im Münzeinsatz (62) befindliche Geldmenge bestimmt und abgespeichert,
- durch den Warenabrechnungscomputer werden die ermittelte Geldmenge und die aus der Barcode-Markierung (65) ausgelesenen Daten in einem Datensatz verknüpft und abgespeichert,
- aus einer Speichereinheit des Warenabrechnungscomputers werden Zusatzangaben, insbesondere Kassennummer, Datum, Uhrzeit, die bereits in selbiger vorliegen, ausgelesen und mit dem Datensatz verknüpft,
- und der so erhaltene Datensatz wird abgespeichert und/oder durch Ausgabemedien (24,26,50) ausgegeben.

6. Verfahren nach Anspruch 5, wobei für wenigstens eine Bedienperson die Datensätze der einzelnen Münzeinsätze (62) orts- und zeitspezifisch aufgesammelt werden und bei Kassenübergabe der Gesamtgeldbetrag des Münzgeldes der einzelnen gewogenen Münzeinsätze (62) durch die Verarbeitungseinheit ermittelt und ausgegeben und/oder zu Revisions- und/oder Kontrollzwecken in einem gesonderten Bereich der Speichereinheit abgespeichert wird.

7. Verfahren nach Anspruch 5 oder 6, **dadurch gekennzeichnet, daß** der Warenabrechnungscomputer Teil eines POS-Kassensystems (10) ist.

8. Verfahren zur Erstellung einer an einem Münzeinsatz anzubringenden Barcode-Markierung (65) nach einem der vorhergehenden Ansprüche, **dadurch gekennzeichnet, daß** die hierzu notwendigen, den Münzeinsatz (62) und die abzulegende Münzart betreffenden Daten mit Hilfe der Scanner-Waage (40) ermittelt bzw. aus der Speichereinheit ausgelesen werden und durch die Verarbeitungseinheit in einen Barcode umgesetzt werden, wobei die Speichereinheit und die Verarbeitungseinheit Bestandteile des Warenabrechnungscomputers sind, und daß der Barcode durch den Etiketten-Drucker (24) als Barcode-Label gedruckt werden.

## Claims

1. Coin tray (62), which can be inserted into a cash drawer (60) and removed therefrom, for a type of coin, **characterized in that** a code (65) which can be scanned by machine and which contains data which characterize said coin tray (62) and the type of coin to be placed in it is provided on or in the coin tray (62).

2. Coin tray (62) according to Claim 1, **characterized in that** at least one code is provided on the underside (63) of the coin tray (62) and it is designed as code (65) which can be optically scanned, preferably as a bar code.

3. Coin tray (62) according to Claim 1 or 2, the code (65) containing information on the weight of the coin tray (62) and/or the operator to whom the cash drawer (60) is assigned.

4. Cash drawer (60) having a plurality of receptacle compartments (62') with in each case one coin tray (62) according to one of Claims 1 to 3, **characterized in that** each coin tray (62) contains at least one mechanical location code (66) which corresponds to a mechanical code (67) in a receptable compartment (62') of the cash drawer (60).

5. Method for determining the quantity of money in a coin tray (62) with a device according to one of the preceding claims, having the following features:
- scanner scales (40) determine the overall weight of the filled coin tray (62) and senses the data which is contained in the code (65) and which characterizes the coin tray (62) and the type of coin to be placed in it,
- the difference between the overall weight of the coin tray (62) and the tare weight, contained in the data of the code (65), of the coin tray (62) is determined by means of a processing unit of a goods billing computer, and the amount of money located in the coin tray (62) is determined by means of processing routines in which the weight of a single coin is recorded, and said amount of money is stored,
- the amounts of money determined by the goods billing computer and the data read from the bar code (65) are logically combined in a data record and stored,
- supplementary information, in particular cash desk number, date, time, which is already present in a memory unit of the goods billing computer is read from said memory unit and logically combined with the data record,
- and the data record which is obtained in this way is stored and/or output by output media (24, 26, 50).

6. Method according to claim 5, the data records of the individual coin trays (62) being collected on a location- and time-specific basis for at least one operator and when the cash till is transferred the total amount of money in the form of coins of the individual, weighed coin trays (62) is determined by the processing unit and output and/or stored in a separate region of the memory unit for auditing and/or inspection purposes.

7. Method according to Claim 5 or 6, **characterized in that** the goods billing computer is part of a POS cash system (10).

8. Method for producing a bar code (65) which is to be provided on a coin tray, according to one of the preceding claims, **characterized in that** the data which is necessary for this and which relates to the coin tray (62) and the type of coin which is to be placed in it is determined using the scanner scales (40) and/or read out from the memory unit and converted into a bar code by the processing unit, the memory unit and the processing unit being components of the goods billing computer, and **in that** the bar code is printed by the receipt printer (24) as a bar code label.

## Revendications

1. Insert (62) pour un type de pièces de monnaie, qui peut être inséré dans un tiroir-caisse (60) et retiré de ce dernier,
**caractérisé en ce qu'**un codage (65) à lecture mécanique, contenant des données caractérisant l'insert (62) pour pièces de monnaie et le type de pièces de monnaie qui peuvent y être déposées, est apposé sur ou dans l'insert (62) pour pièces de monnaie.

2. Insert (62) pour monnaie suivant la revendication 1,
**caractérisé en ce qu'**au moins un codage est apposé sur le dessous (63) de l'insert (62) pour pièces de monnaie, codage qui est réalisé sous forme de codage (65) à lecture optique, de préférence sous forme de marquage à code barres.

3. Insert (62) pour monnaie suivant la revendication 1 ou 2, le codage (65) contenant des indications sur le poids de l'insert (62) pour pièces de monnaie et/ou sur l'opérateur auquel est affecté le tiroir-caisse (60).

4. Tiroir-caisse (60) comportant une pluralité de casiers (62') récepteurs pourvus chacun d'un insert (62) pour pièces de monnaie suivant l'une des revendications 1 à 3,
**caractérisé en ce que** chaque insert (62) pour pièces de monnaie comporte au moins un codage (66) mécanique d'emplacement, qui correspond avec un codage (67) mécanique dans un casier (62') récepteur du tiroir-caisse (60).

5. Procédé pour déterminer la quantité d'argent se trouvant dans un insert (62) pour pièces de monnaie au moyen d'un système suivant l'une des revendications précédentes, comportant les caractéristiques suivantes :
- une balance (40) à scanner détermine le poids total de l'insert (62) rempli pour pièces de monnaie et lit les données contenues dans le codage (65) qui caractérisent l'insert (62) pour pièces de monnaie et le type de pièces de monnaie qui peuvent y être déposées,
- une unité de traitement d'un ordinateur de décompte de marchandises détermine la différence entre le poids total de l'insert (62) pour pièces de monnaie et la tare, contenue dans les données du codage (65), de l'insert (62) pour pièces de monnaie, et, au moyen de routines de traitement dans lesquelles est enregistré le poids d'une pièce de monnaie individuelle, détermine et mémorise la quantité d'argent qui se trouve dans l'insert (62) pour pièces de monnaie,
- l'ordinateur de décompte de marchandises associe et mémorise la quantité d'argent déterminée et les données lues dans le marquage (65) à code barres,
- des indications supplémentaires, notamment le numéro de caisse, la date et l'heure, qui sont déjà présentes dans une unité de mémorisation de l'ordinateur de décompte de marchandises, sont lues dans celle-ci et associées au jeu de données,
- et le jeu de données ainsi obtenu est mémorisé et/ou édité par des moyens (24, 26, 50) d'édition.

6. Procédé suivant la revendication 5, suivant lequel, pour au moins un opérateur, les jeux de données des différents inserts (62) pour monnaie sont collectés d'une manière spécifique de l'emplacement et du temps et, lors du transfert de caisse, la somme totale d'argent en pièces de monnaie des différents inserts (62) pesés pour pièces de monnaie est déterminée et éditée, et/ou mémorisée dans une zone particulière de l'unité de mémorisation à des fins de révision et/ou de contrôle.

7. Procédé suivant la revendication 5 ou 6, **caractérisé en ce que** l'ordinateur de décompte de marchandises fait partie d'un système (10) de caisse de point de vente.

8. Procédé pour élaborer un marquage (65) à code barres, à apposer sur un insert pour pièces de monnaie, suivant l'une des revendications précédentes, **caractérisé en ce que** les données nécessaires à cet effet, concernant l'insert (62) pour pièces de monnaie et le type de pièces de monnaie qui doivent y être déposées, sont déterminées à l'aide de la balance (40) à scanner ou respectivement lues dans l'unité de mémorisation, et sont transformées par l'unité de traitement en un code barres, l'unité de mémorisation et l'unité de traitement étant des éléments de l'ordinateur de décompte de marchandises, et **en ce que** le code barres est imprimé par l'imprimante (24) d'étiquettes sous forme d'étiquette à code barres.
